# EUROPÄISCHE PATENTANMELDUNG

(11) **EP 2 503 177 A2**
(43) Veröffentlichungstag der Anmeldung: **26.09.2012**
(21) Anmeldenummer: 12001687.8
(22) Anmeldetag: 13.03.2012
(51) Int. Cl.: F16F 7/10

(54) **Verfahren zum Betreiben eines aktiven Motorlagers für ein Fahrzeug und aktives Motorlager**

(30) Priorität: 25.03.2011 DE 102011015010
(71) Anmelder: AUDI AG, 85045 Ingolstadt (DE)
(72) Erfinder: Michenthaler, Christof, 85080 Gaimersheim (DE)
(74) Vertreter: Engelhardt, Harald

(57) **Zusammenfassung**

Die Erfindung betrifft ein Verfahren zum Betreiben eines aktiven Motorlagers (18) für ein Fahrzeug (10), bei welchem ein Leistungsverstärker (20) wenigstens ein Lagerelement (14) mit einer Schwingung beaufschlagt. Über das Lagerelement (14) ist der Motor (12) an die Karosserie (16) des Fahrzeugs (10) angebunden. Der Leistungsverstärker (20) wird beim Beaufschlagen des wenigstens einen Lagerelements (14) mit der Schwingung mit einer geringeren als seiner maximalen Leistung betrieben, wenn seine Temperatur wenigstens einen vorbestimmten Schwellenwert überschreitet. Des Weiteren betrifft die Erfindung ein aktives Motorlager (18) für ein Fahrzeug (10).

## Beschreibung

Die Erfindung betrifft ein Verfahren zum Betreiben eines aktiven Motorlagers für ein Fahrzeug, bei welchem ein Leistungsverstärker wenigstens ein Lagerelement mit einer Schwingung beaufschlagt. Über das wenigstens eine Lagerelement ist der Motor an die Karosserie des Fahrzeugs angebunden. Des Weiteren betrifft die Erfindung ein aktives Motorlager für ein Fahrzeug.

Bei einem aktiven Motorlager wird ein beispielsweise aus Gummi gebildetes Lagerelement durch einen Aktor in Schwingung versetzt. Ein Regelkreis regelt hierbei die Schwingung so, dass sie zu dem Körperschall des Motors um 180° phasenverschoben ist. Dadurch wird der ansonsten auf die Karosserie wirkende Körperschall ausgelöscht. Zum Beaufschlagen des Lagerelements mit der Schwingung kann ein Leistungsverstärker verwendet werden, welcher ähnlich einem Audioverstärker aufgebaut ist, der die Membran eines Basslautsprechers antreibt. Um einen solchen Leistungsverstärker vor einer Überhitzung zu schützen, ist es aus dem Stand der Technik bekannt, diesen bei hoher Temperatur abzuschalten.

Des Weiteren beschreibt die DE 10 2007 042 222 A1 ein aktives Motorlager, bei welchem ein Dämpfungselement mit einer magnetorheologischen Flüssigkeit zum Einsatz kommt. In der Flüssigkeit befinden sich Partikel, deren durch ein Magnetfeld beeinflussbare Ausrichtung die Viskosität der Flüssigkeit verändert. Durch Anlegen des Magnetfelds wird die Viskosität der Flüssigkeit eingestellt und damit die Dämpfungseigenschaft des Motorlagers verändert. Hierbei wird während des Startens und Abstellens des Fahrzeugmotors eine Dämpfung eingestellt, welche die dann besonders starken Schwingungen des Motors möglichst weitgehend tilgt.

Aufgabe der vorliegenden Erfindung ist, ein Verfahren der eingangs genannten Art sowie ein aktives Motorlager zu schaffen, welches eine verbesserte Auslöschung von Körperschall des Motors ermöglicht.

Diese Aufgabe wird durch ein Verfahren mit den Merkmalen des Patentanspruchs 1 und durch ein aktives Motorlager mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren zum Betreiben eines aktiven Motorlagers für ein Fahrzeug beaufschlagt ein Leistungsverstärker wenigstens ein Lagerelement, über welches der Motor an die Karosserie des Fahrzeugs angebunden ist, mit einer Schwingung. Beim Beaufschlagen des wenigstens einen Lagerelements mit der Schwingung wird der Leistungsverstärker mit einer geringeren als seiner maximalen Leistung betrieben, wenn seine Temperatur wenigstens einen vorbestimmten Schwellenwert überschreitet. Dem liegt die Erkenntnis zugrunde, dass es beim Betreiben des Leistungsverstärkers mit voller Leistung und gleichzeitig hoher Umgebungstemperatur zu einer temperaturbedingten Schädigung des Leistungsverstärkers kommen kann.

Wird jedoch der Leistungsverstärker beim Erreichen eines - je nach Verstärkertyp unterschiedlich hohen - Schwellenwerts der Umgebungstemperatur abgeschaltet, so kann das Motorlager nicht mehr aktiv den Körperschall des Motors auslöschen, da der Leistungsverstärker in dem Lagerelement keinen Körperschall mehr als Gegenschall erzeugen kann. Wird der Leistungsverstärker hingegen wie vorliegend mit einer geringeren als seiner maximalen Leistung betrieben, so kann er weiterhin sowohl Motorgeräusche als auch Vibrationen ausschalten, die über das Lagerelement in die Karosserie eingeleitet werden, oder diese zumindest weitgehend verringern. Dadurch ist eine verbesserte Auslöschung von Körperschall sichergestellt, welche einen besonders hohen Komfort mit sich bringt, ohne dass es zu einer Überhitzung oder Schädigung des Leistungsverstärkers kommt.

In einer vorteilhaften Ausgestaltung der Erfindung wird der Leistungsverstärker mit seiner maximalen Leistung betrieben, solange seine Temperatur kleine oder gleich einem ersten Schwellenwert ist. Dadurch kann bis zu diesem ersten Schwellenwert ein Einleiten von Körperschall in die Karosserie über das Lagerelement besonders weitgehend unterbunden werden.

Ein besonders hohes einfaches Verfahren lässt sich schaffen, wenn gemäß einer weiteren vorteilhaften Ausgestaltung der Erfindung der Leistungsverstärker in einem Temperaturintervall zwischen dem ersten Schwellenwert und einem zweiten Schwellenwert, welcher größer ist als der erste Schwellenwert, mit einer um einen konstanten Wert verringerten Leistung betrieben wird. Eine solche Verringerung der Leistung in einem diskreten Schritt ist regelungstechnisch besonders einfach umzusetzen. Alternativ kann jedoch auch in dem Temperaturintervall der Leistungsverstärker beim Beaufschlagen des Lagerelements mit der Schwingung mit einer bei ansteigender Temperatur kontinuierlich verringerten Leistung betrieben werden.

Als weiter vorteilhaft hat es sich gezeigt, wenn der Leistungsverstärker in einem Temperaturintervall zwischen dem zweiten Schwellenwert und einem dritten Schwellenwert, welcher größer ist als der zweite Schwellenwert, mit einer weiter verringerten Leistung betrieben wird. Durch das Vorsehen einer solchen dreistufigen Leistungsverringerung in Abhängigkeit von der Temperatur des Leistungsverstärkers kann besonders gut den Erfordernissen einer möglichst weitgehenden Verringerung des Körperschalls als auch der Vermeidung einer Überhitzung des Leistungsverstärkers Rechnung getragen werden.

Mit Erreichen des von dem zweiten Schwellenwert und dem dritten Schwellenwert begrenzten Temperaturintervalls kann die Leistung ebenfalls um einen konstanten Wert verringert werden, um eine besonders einfache Regelung zu ermöglichen. Auch hier kann jedoch alternativ die Leistung mit in dem zweiten Temperaturintervall ansteigender Temperatur kontinuierlich verringert werden.

Weiter vorteilhaft ist es, wenn der konstante Wert, um welchen in dem Temperaturintervall die Leistung des Leistungsverstärkers verringert wird, ein als Stammbruch darstellbarer Bruchteil der maximalen Leistung mit der Anzahl der Schwellenwerte im Nenner des Stammbruchs ist. Bei Vorliegen von zwei Schwellenwerten wird die Leistung im Temperaturintervall also um die Hälfte verringert, bei drei Schwellwerten um jeweils ein Drittel pro Schwellwert. So wird die zur Verfügung stehende Leistung des Leistungsverstärkers besonders gleichmäßig geändert.

In alternativen Ausführungsformen können auch mehr Schwellenwerte und dementsprechend Temperaturintervalle vorgesehen sein, so dass eine besonders feine abgestufte Leistungsverringerung möglich ist.

Von Vorteil ist weiterhin, wenn der erste Schwellenwert 90 °C bis 100 °C, der zweite Schwellenwert 100 °C bis 110 °C und der dritte Schwellenwert 110 °C bis 125 °C betragen. Dadurch kann bis zu einem vergleichsweise hohen ersten Schwellenwert der Temperatur der Leistungsverstärker mit seiner maximalen Leistung betrieben werden. Darüber hinaus kann sichergestellt werden, dass auch bei einer sehr hohen Temperatur in der Umgebung des Motors, nämlich bei einer Temperatur bis zu dem dritten Schwellenwert, noch ein Betrieb des Leistungsverstärkers und somit ein Beaufschlagen des Lagerelements mit der Schwingung möglich ist, wenn auch mit verringerter Leistung.

Bevorzugt liegen der erste Schwellenwert bei 95 °C, der zweite Schwellenwert bei 105 °C und der dritte Schwellenwert bei 120 °C. Üblicherweise wird nämlich im Fahrzeugbau dafür gesorgt, dass in der Umgebung des Motors keine Temperatur von mehr als 120 °C vorliegt. Damit ist eine maximale Temperatur gegeben, welcher der Leistungsverstärker ausgesetzt ist. Wenn der dritte Schwellenwert bei dieser maximalen Temperatur von 120 °C liegt, so kann sichergestellt werden, dass über den gesamten im Betrieb des Motors auftretenden Temperaturbereich hinweg ein zumindest weitgehendes Auslöschen von Schwingungen desselben durch einen phasenverschobenen Gegenschall möglich ist.

In einer weiteren vorteilhaften Ausgestaltung der Erfindung wird der Leistungsverstärker mittels wenigstens einer Kühleinrichtung gekühlt. Dies erlaubt es, einen besonders hohen vorbestimmten Schwellenwert vorzusehen, bei dessen Überschreiten die Leistung des Leistungsverstärkers erstmals verringert wird. Als Kühleinrichtung kann ein - insbesondere Kühlrippen aufweisendes - Metallteil oder dergleichen Wärmeübertrager zum Einsatz kommen, welcher von einem den Leistungsverstärker aufweisenden Gehäuse Wärme abführen kann. Auch kann eine gezielte Beaufschlagung des Leistungsverstärkers mit einem Kühlmedienstrom, insbesondere Kühlluftstrom, vorgesehen sein.

Schließlich hat sich als vorteilhaft gezeigt, wenn die Leistung des Leistungsverstärkers auf einen Wert Null verringert wird, wenn seine Temperatur einen weiteren vorbestimmten Schwellenwert erreicht. Dadurch wird sichergestellt, dass selbst bei einem unüblich hohen Wärmeeintrag eine Beschädigung des Leistungsverstärkers durch Überhitzung vermieden wird.

Das erfindungsgemäße aktive Motorlager für ein Fahrzeug umfasst wenigstens ein Lagerelement, über welches der Motor an die Karosserie des Fahrzeugs angebunden ist und einen Leistungsverstärker, mittels welchem das wenigstens eine Lagerelement mit einer Schwingung beaufschlagbar ist. Ein Temperatursensor dient zum Erfassen einer Temperatur des Leistungsverstärkers. Hierbei ist der Temperatursensor mit einer Steuerungseinrichtung gekoppelt, mittels welcher der Leistungsverstärker beim Beaufschlagen des wenigstens einen Lagerelements mit der Schwingung mit einer geringeren als seiner maximalen Leistung betreibbar ist, wenn der Temperatursensor eine vorbestimmte Temperatur erfasst.

Ein solches aktives Motorlager ermöglicht eine Auslöschung von Körperschall des Motors durch Beaufschlagen des Lagerelements mit der Schwingung auch bei einer vergleichsweise hohen Temperatur des Leistungsverstärkers, da um dessen Überhitzen zu vermeiden, seine Leistung reduziert wird.

Die für das erfindungsgemäße Verfahren beschriebenen Vorteile und bevorzugten Ausführungsformen gelten auch für das erfindungsgemäße aktive Motorlager.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: stark schematisiert ein aktives Motorlager für ein Fahrzeug, wobei ein Gummilager, über welches der Motor an die Karosserie angebunden ist, mittels eines Leistungsverstärkers mit einer Schwingung beaufschlagt werden kann; und
- Fig. 2: das abgestufte Verringern der Leistung des Leistungsverstärkers in Abhängigkeit von dessen Temperatur.

Von einem Fahrzeug 10 ist in der Figur stark schematisiert ein Verbrennungsmotor 12 gezeigt, welcher über ein Gummilager 14 an eine Karosserie 16 des Fahrzeugs 10 angebunden ist. Vorliegend ist beispielhaft lediglich ein Gummilager 14 gezeigt, jedoch ist der Verbrennungsmotor 12 üblicherweise über wenigstens zwei Gummilager 14 oder dergleichen Lagerelemente an die Karosserie 16 angebunden.

Ein aktives Motorlager 18 umfasst einen Leistungsverstärker 20, welcher das Gummilager 14 mit einer Schwingung beaufschlagen kann, so wie ein Audioverstärker die Membran eines Basslautsprechers in Schwingung versetzt. Bei zwei Gummilagern 14 kann der Leistungsverstärker 20 auf beide Gummilager 14 die Schwingung übertragen.

Der Leistungsverstärker 20 ist vorliegend in ein Steuergerät 22 integriert, welchem von einem (nicht gezeigten) Sensor Messwerte zugeführt werden. Die von dem Sensor erfassten Messwerte lassen auf die Schwingungen des Verbrennungsmotors 12 rückschließen. Ein in das Steuergerät 22 implementierter Regelkreis sorgt dafür, dass der Leistungsverstärker 20 eine Schwingung auf das Gummilager 14 überträgt, welche die gleiche Amplitude wie die Ausgangsschwingung des Körperschalls des Verbrennungsmotors 12 besitzt, jedoch um 180° phasenverschoben ist. Dadurch können nach Art einer Gegenschallquelle über das Gummilager 14 sowohl das Motorgeräusch als auch Vibrationen ausgelöscht werden, so dass deren Einleitung in die Karosserie 16 zumindest weitgehend verhindert wird.

Das Gummilager 14 kann insbesondere eine Flüssigkeit enthalten, um eine zum Auslöschen des Körperschalls des Verbrennungsmotors 12 besonders günstige Eigenfrequenz bereitzustellen.

Ein vorliegend durch Integration in das Steuergerät 22 mit demselben gekoppelter Temperatursensor 24 erfasst die Temperatur des Leistungsverstärkers 20. Wenn der Leistungsverstärker 20 mit seiner maximalen Leistung betrieben wird und gleichzeitig aufgrund der Abwärme des Verbrennungsmotors 12 einer sehr hohen Wärmebelastung ausgesetzt ist, so kann dies zu möglicherweise irreparablen Schäden am Leistungsverstärker 20 führen.

Vorliegend wird daher die Leistung des Leistungsverstärkers 20 reduziert, wenn seine Temperatur einen ersten Schwellenwert überschreitet. Bis zum Erreichen des ersten Schwellenwerts, welcher beispielsweise bei 95 °C liegen kann, wird der Leistungsverstärker 20 mit seiner maximalen Leistung betrieben, beispielsweise mit einer Leistung von 60 W.

Überschreitet die Temperatur des Leistungsverstärkers 20 den ersten Schwellenwert von 95 °C, so kann eine Verringerung der Leistung um beispielsweise 20 W auf 40 W vorgesehen sein. Wenn der Leistungsverstärker 20 das Gummilager 14 mit dieser verringerten Leistung mit der Schwingung beaufschlagt, lässt sich weiterhin eine vergleichsweise weitgehende Auslöschung des Körperschalls des Verbrennungsmotors 12 erreichen.

Es kann vorgesehen sein, diese verringerte Leistung bis zum Überschreiten eines zweiten Schwellenwerts beizubehalten, welcher insbesondere bei 105 °C liegen kann. Liegt in der Umgebung des Verbrennungsmotors 12 und somit am Leistungsverstärker 20 eine Temperatur von mehr als (im genannten Beispiel) 105 °C vor, so wird die Leistung des Leistungsverstärkers 20 abermals verringert. Beispielsweise kann eine Leistungsverringerung um 40 W der vollen Leistung auf dann 20 W vorgesehen sein. Mit dieser vergleichsweise geringen Leistung ist es immer noch möglich, die Einleitung von Körperschall des Verbrennungsmotors 12 über das Gummilager 14 in die Karosserie 16 zu vermindern.

Beim Überschreiten eines dritten Schwellenwerts der Temperatur kann der Leistungsverstärker 20 abgeschaltet, also seine Leistung auf den Wert Null verringert werden. Diese dritte Temperaturschwelle kann beispielsweise bei 120 °C liegen, da üblicherweise dafür gesorgt wird, dass im Umfeld des Verbrennungsmotors 12 keine Temperaturen von mehr als 120 °C auftreten.

Mit einer derart abgestuften Leistungsverringerung bzw. Abschaltung des Leistungsverstärkers 20 lässt sich also über den gesamten im Normalbetrieb des Verbrennungsmotors 12 auftretenden Temperaturbereich hinweg eine besonders weitgehende Reduktion von Körperschall desselben erreichen.

Ein Gehäuse 26 des Steuergeräts 22, welches vorliegend auch den in das Steuergerät 22 integrierten Leistungsverstärker 20 umgibt, kann als Kühleinrichtung einen (nicht gezeigten) Wärmeübertrager aufweisen, so dass die erste Temperaturschwelle vergleichsweise hoch gewählt werden kann.

Bei Vorsehen von weiter gehenden, aufwändigeren Kühlmaßnahmen für den Leistungsverstärker 20 können die vorliegend beispielhaft genannten Schwellenwerte, ab welchen eine jeweilige Leistungsreduzierung des Leistungsverstärkers 20 vorgenommen wird, höher gewählt werden.

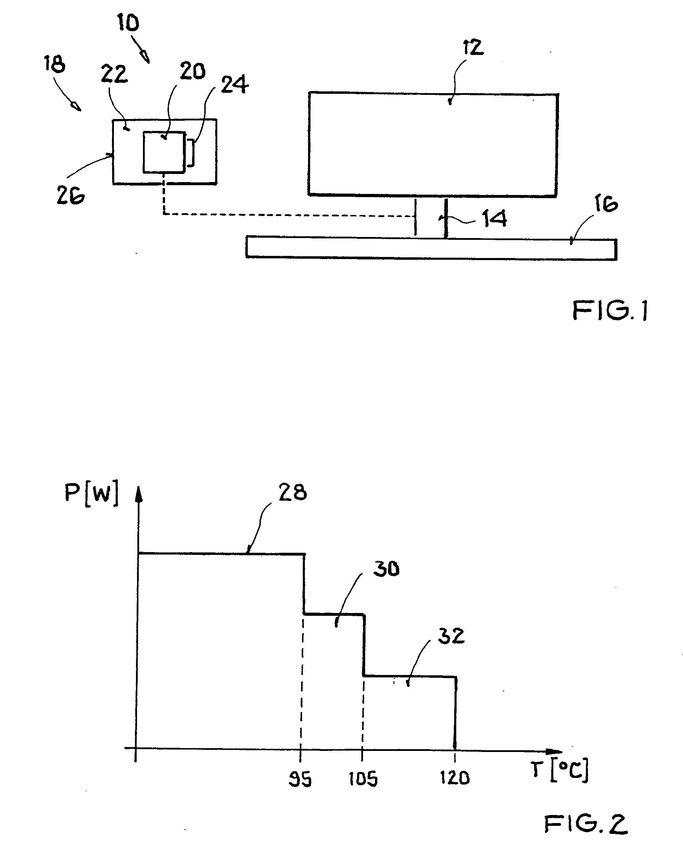

Fig. 2 zeigt eine Kurve 28, welche die Leistung P des Leistungsverstärkers 20 in Watt in Abhängigkeit von seiner Temperatur T angibt. Bis zum Erreichen des ersten Schwellenwerts von 95 °C wird dementsprechend der Leistungsverstärker 20 mit seiner maximalen Leistung betrieben. In einem ersten Temperaturintervall 30 zwischen dem ersten Schwellenwert und dem zweiten Schwellenwert von vorliegend 105 °C ist die Leistung P verringert und zwar entsprechend der oben beispielhaft angegebenen Zahlenwerte auf 40 W.

In einem zweiten Temperaturintervall 32 zwischen dem zweiten Schwellenwert von 105 °C und dem dritten Schwellenwert von beispielsweise 120 °C wird die Leistung P des Leistungsverstärkers 20 abermals verringert, vorliegend auf 20 W. Überschreitet die Temperatur T des Leistungsverstärkers 20 den dritten Schwellenwert von 120 °C wird der Leistungsverstärker 20 außer Betrieb genommen.

## Patentansprüche

1. Verfahren zum Betreiben eines aktiven Motorlagers (18) für ein Fahrzeug (10), bei welchem ein Leistungsverstärker (20) wenigstens ein Lagerelement (14) mit einer Schwingung beaufschlagt, über welches der Motor (12) an die Karosserie (16) des Fahrzeugs (10) angebunden ist,
**dadurch gekennzeichnet, dass**
der Leistungsverstärker (20) beim Beaufschlagen des wenigstens einen Lagerelements (14) mit der Schwingung mit einer geringeren als seiner maximalen Leistung betrieben wird, wenn seine Temperatur wenigstens einen vorbestimmten Schwellenwert überschreitet.

2. Verfahren nach Anspruch 1,
**dadurch gekennzeichnet, dass**
der Leistungsverstärker (20) mit seiner maximalen Leistung betrieben wird, solange seine Temperatur kleiner oder gleich einem ersten Schwellenwert ist.

3. Verfahren nach Anspruch 2,
**dadurch gekennzeichnet, dass**
der Leistungsverstärker (20) in einem Temperaturintervall (30) zwischen dem ersten Schwellenwert und einem zweiten Schwellenwert, welcher größer ist als der erste Schwellenwert, mit einer um einen konstanten Wert verringerten Leistung betrieben wird.

4. Verfahren nach Anspruch 3,
**dadurch gekennzeichnet, dass**
der Leistungsverstärker (20) in einem Temperaturintervall (32) zwischen dem zweiten Schwellenwert und einem dritten Schwellenwert, welcher größer ist als der zweite Schwellenwert, mit einer weiter, insbesondere um einen konstanten Wert, verringerten Leistung betrieben wird.

5. Verfahren nach Anspruch 3 oder 4,
**dadurch gekennzeichnet, dass**
der konstante Wert, um welchen in dem Temperaturintervall (30, 32) die Leistung des Leistungsverstärkers (20) verringert wird, ein als Stammbruch darstellbarer Bruchteil der maximalen Leistung mit der Anzahl der Schwellenwerte im Nenner des Stammbruchs ist.

6. Verfahren nach Anspruch 4 oder 5,
**dadurch gekennzeichnet, dass**
der erste Schwellenwert 90°C bis 100°C, insbesondere 95°C, der zweite Schwellenwert 100°C bis 110°C, insbesondere 105°C, und der dritte Schwellenwert 110°C bis 125°C, insbesondere 120°C, betragen.

7. Verfahren nach einem der Ansprüche 1 bis 6,
**dadurch gekennzeichnet, dass**
der Leistungsverstärker (20) mittels wenigstens einer Kühleinrichtung gekühlt wird.

8. Verfahren nach einem der Ansprüche 1 bis 7,
**dadurch gekennzeichnet, dass**
die Leistung des Leistungsverstärkers (20) auf einen Wert Null verringert wird, wenn seine Temperatur einen weiteren vorbestimmten Schwellenwert erreicht.

9. Aktives Motorlager für ein Fahrzeug (10), mit wenigstens einem Lagerelement (14), über welches der Motor (12) an die Karosserie (16) des Fahrzeugs (10) angebunden ist, mit einem Leistungsverstärker (20), mittels welchem das wenigstens eine Lagerelement (14) mit einer Schwingung beaufschlagbar ist, und mit einem Temperatursensor (24) zum Erfassen einer Temperatur des Leistungsverstärkers (20),
**dadurch gekennzeichnet, dass**
der Temperatursensor (24) mit einer Steuerungseinrichtung (22) gekoppelt ist, mittels welcher der Leistungsverstärker (20) beim Beaufschlagen des wenigstens einen Lagerelements (14) mit der Schwingung mit einer geringeren als seiner maximalen Leistung betreibbar ist, wenn der Temperatursensor (24) eine vorbestimmte Temperatur erfasst.
